# EUROPÄISCHE PATENTSCHRIFT

(11) **EP 0 431 658 B1**
(45) Veröffentlichungstag und Bekanntmachung des Hinweises auf die Patenterteilung: **09.03.1994**
(21) Anmeldenummer: 90202983.4
(22) Anmeldetag: 12.11.1990
(51) Int. Cl.: G01T 1/29

(54) **Verfahren zum Abtasten einer Röntgenaufnahme mittels Elektrometersonden und Anordnung zur Durchführung des Verfahrens**
Method and arrangement for scanning an X-ray plate using an electrometer probe
Procédé et montage pour balayage d'image de rayonnement X utilisant une sonde électromagnétique

(30) Priorität: 16.11.1989 DE 3938096
(43) Veröffentlichungstag der Anmeldung: 12.06.1991
(73) Patentinhaber: Philips Patentverwaltung GmbH, 22335 Hamburg (DE); Philips Electronics N.V., 5621 BA Eindhoven (NL)
(72) Erfinder: Hillen, Walter, Dr., W-5100 Aachen (DE); Rupp, Stephan, W-5190 Stolberg-Breinig (DE); Schiebel, Ulrich, Dr., W-5100 Aachen (DE)
(74) Vertreter: von Laue, Hanns-Ulrich, Dipl.-Ing.

(56) Entgegenhaltungen:
- DE-A- 3 534 768
- US-A- 4 209 803

## Beschreibung

Die Erfindung betrifft ein Verfahren zum Abtasten einer Röntgenaufnahme mittels mehrerer Elektrometersonden, welche Ladungsmuster eines Photoleiters abtasten, der vor der Röntgenaufnahme örtlich gleichmäßig aufgeladen wird, der durch die Aufnahme in Abhängigkeit der Intensität der Röntgenstrahlung entladen wird und dessen Oberfläche nach der Aufnahme zur Erfassung der Ladungsdichte abgetastet wird, wobei mittels der Elektrometersonden für jeden Bildpunkt ein der Entladung an dem Bildpunkt entsprechender Bildwert gebildet wird. Ein solches Verfahren und eine solche Anordnung sind in der DE-OS 35 34 768 beschrieben.

Bei einem solchen Verfahren zum Abtasten einer Röntgenaufnahme werden die Bildwerte der verschiedenen Bildpunkte aus den Ausgangssignalen verschiedener Elektrometersonden ermittelt. Streuungen in der Empfindlichkeit der verschiedenen Elektrometersonden gehen in die Bestimmung der verschiedenen Bildwerte direkt ein. Werden die Ladungsmuster mittels der Elektrometersonden zeilenweise abgetastet, so entsteht aufgrund differierender Empfindlichkeit der Sonden eine Streifigkeit in dem Bild. Es ist Aufgabe der Erfindung, diese Streifigkeit weitgehend zu entfernen.

Diese Aufgabe wird erfindungsgemäß dadurch gelöst, daß für alle Elektrometersonden eine Empfindlichkeitskalibrierung in der Weise vorgenommen wird, daß jeweils zwei Sonden einen identischen Teil der Aufnahme abtasten und daß aus dem Vergleich der dabei gelieferten Ausgangssignale der Sonden deren Empfindlichkeit bestimmt wird, welche zur Korrektur der Bildwerte herangezogen wird.

Wird ein identischer Teil des Ladungsmusters mittels zweier Elektrometersonden nacheinander abgetastet, so müßten die Ausgangssignale beider Sonden dabei gleich sein. Sind sie dies nicht, so kann aus der Differenz der Ausgangssignale direkt auf eine Empfindlichkeitsdifferenz der beiden Elektrometersonden geschlossen werden. Geschieht dies nacheinander für alle Elektrometersonden, mittels welcher die Ladungsmuster abgetastet werden sollen oder wurden, so können auf diese Weise die relativen Empfindlichkeiten aller Elektrometersonden zueinander ermittelt werden. Aus diesen Werten wiederum wird eine Korrektur der Bildwerte in der Weise vorgenommen, daß die von einer bestimmten Elektrometersonde erzeugten Bildwerte in Abhängigkeit von deren zuvor ermittelter Empfindlichkeit korrigiert werden.

Dieses Verfahren bietet den Vorteil, daß unterschiedliche Sondenaperturen, differierende Sonden-Selen-Abstände und verschiedene Eingangskapazitäten der Schaltungen, in denen die Ausgangssignale der Elektrometersonden weiterverarbeitet werden, durch den oben beschriebenen Kalibrierungsprozeß ausgeglichen werden. Darüber hinaus werden auch Schwankungen der Empfindlichkeit der verschiedenen Sonden ausgeglichen, welche sich im Laufe der Zeit ergeben. Je nach Erfordernis der Genauigkeit des Empfindlichkeitsausgleichs kann das Verfahren vor oder nach jeder Röntgenaufnahme oder auch in bestimmten zeitlichen Abständen vorgenommen werden. Der Ausgleich der Empfindlichkeiten der Elektrometersonden kann sehr genau erfolgen und ist nur abhängig von der Genauigkeit der Berechnung der differierenden Empfindlichkeitswerte bzw. der Korrektur der Bildwerte.

Nach einer Ausgestaltung des Verfahrens ist vorgesehen, daß die Abtastung der Ladungsdichte mittels der Elektrometersonden zeilenweise erfolgt und daß für die Kalibrierung alle Sonden dieselbe Bildzeile abtasten. Zur oben beschriebenen Kalibrierung der Empfindlichkeit der Sonden erfordert es den geringsten mathematischen Aufwand, wenn alle Sonden dieselbe Bildzeile abtasten. In diesem Falle sind deren Abtastwerte direkt miteinander vergleichbar und zur Bestimmung der Empfindlichkeitswerte heranziehbar.

Nach einer weiteren Ausgestaltung der Erfindung ist vorgesehen, daß die Abtastung der Ladungsdichte zeilenweise erfolgt und daß zur Kalibrierung jeweils zwei benachbarte Sonden dieselbe Bildzeile abtasten. Bei bestimmten mechanischen Konstellationen einer Vorrichtung zur Durchführung des Verfahrens kann es unmöglich sein, alle Sonden über dieselbe Zeile des Ladungsmusters zu führen. In diesem Falle werden zur Kalibrierung jeweils zwei Sonden über eine Bildzeile geführt. Es werden hier also verschiedene Bildzeilen zur Kalibrierung eingesetzt. Da aber jede abgetastete Bildzeile von zwei Sonden abgetastet wurde, können die relativen Empfindlichkeiten der benachbarten Sonden ermittelt werden. Für jede einzelne Sonde ergeben sich somit zwei relative Empfindlichkeitswerte zu den beiden jeweils benachbarten Sonden. Auf diese Weise ist es auch bei verschiedenem Inhalt der abgetasteten Bildzeilen möglich, eine relative Empfindlichkeit der Sonden zueinander für alle Sonden zu ermitteln.

Für das oben beschriebene Verfahren mit mehreren nebeneinander in gleichen Abständen angeordneten Elektrometersonden, welche zur Erfassung des Ladungsbildes je eine Zeile abtasten, welche anschließend über den Abstand zweier Zeilen senkrecht zur Abtastrichtung verschoben werden, wobei dieser Vorgang sich so oft wiederholt, bis alle Zeilen einmal abgetastet worden sind, ist nach einer weiteren Ausgestaltung der Erfindung vorgesehen, daß zur Kalibrierung der Sondenempfindlichkeiteine weitere Verschiebung der Sonden um einen Zeilenabstand erfolgt und jede Sonde eine Zeile abtastet, welche bereits durch eine andere Sonde abgetastet wurde und daß die doppelt vorliegenden Bildwerte zur Bestimmung der Empfindlichkeit der Sonden und zur Korrektur aller Bildwerte herangezogen werden.

Da die Elektrometersonden nicht beliebig dicht nebeneinander realisierbar sind, ist bei derartigen Anordnungen meistens vorgesehen, daß die Sonden senkrecht zur Abtastrichtung verschoben werden. Auf diese Weise können mittels einer Sonde mehrere Bildzeilen nacheinander abgetastet werden. Bei derartigen Abtastverfahren ist es vorteilhaft, zur Kalibrierung der Sondenempfindlichkeit eine weitere Verschiebung der Sonden um einen Zeilenabstand vorzunehmen, d.h. also um den Abstand von Zeilenmitte zu Zeilenmitte zweier benachbarter Bildzeilen. Es wird dann durch jede Elektrometersonde eine Zeile des Ladungsbildes abgetastet, welches zuvor bereits durch eine andere Elektrometersonde abgetastet wurde. Auch in diesem Falle liegen also für jeweils benachbarte Elektrometersonden zwei Abtastwerte ein und derselben Bildzeile vor, so daß auch in diesem Falle, wie oben beschrieben, die relativen Empfindlichkeiten der Elektrometersonden ermittelt werden können.

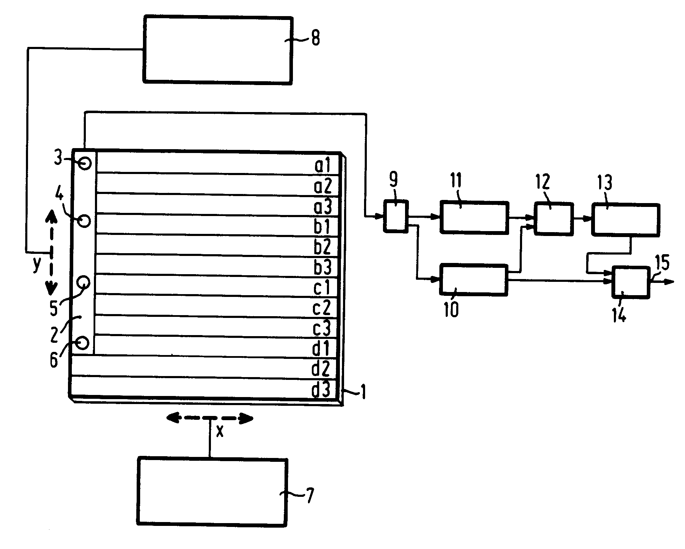

Die Erfindung wird nachstehend anhand der Zeichnung näher erläutert.

Die Figur zeigt ein Blockschaltbild einer Vorrichtung zur Durchführung des Verfahrens.

Die Figur zeigt in schematischer Darstellung einen Fotoleiter 1. Der Fotoleiter 1 weist in der Figur durch Striche angedeutet verschiedene schmale rechteckige Bereiche a₁...a₃, b₁...b₃, c₁...c₃ und d₁...d₃ auf.

Im Bereich des Fotoleiters ist ein Sondenträger 2 vorgesehen, auf welchem vier Elektrometersonden 3, 4, 5 und 6 in einer Reihe angeordnet sind. Wie noch näher zu erläutert sein wird, dienen die Elektrometersonden 3, 4, 5 und 6 dazu, die rechteckigen Bereiche a₁...d₃ des Fotoleiters 1 abzutasten.

Der Fotoleiter 1 ist in in der Figur nicht näher dargestellter Weise in X-Richtung bewegbar; eine Steuerung dieser Bewegung wird mittels einer in der Figur als Schaltungsblock dargestellten Steuerungseinheit 7 vorgenommen.

Es ist eine weitere Steuerungseinheit 8 vorgesehen, welche dazu dient, den Sondenträger 2 in einer Richtung senkrecht zum Verlauf der schmalen rechteckförmigen Bereiche a₁...d₃ zu verschieben.

Für die nachfolgende Beschreibung der Kalibrierung der Empfindlichkeiten der Elektrometersonden 3 bis 6 wird davon ausgegangen, daß der Fotoleiter 1 vor einer Röntgenaufnahme in in der Figur nicht dargestellter Weise gleichmäßig aufgeladen wurde, daß er durch die nachfolgende Röntgenaufnahme in Abhängigkeit von der Intensität der Röntgenstrahlen örtlich verschieden stark entladen wurde und daß dessen Oberfläche nunmehr nach der Aufnahme ein Ladungsmuster aufweist.

Ein Abtastvorgang dieses Ladungsmusters kann beispielsweise in der Weise geschehen, daß der Sondenträger 2 mit den Elektrometersonden 3 bis 6 in X-Richtung über den Fotoleiter 1 bewegt wird. Dabei werden zunächst mittels der Elektrometersonden 3 der Bereich a₁, mittels der Elektrometersonde 4 der Bereich b₁, mittels der Elektrometersonde 5 der Bereich c₁ und mittels der Elektrometersonde 6 der Bereich d₁ abgetastet. Die dabei von den Elektrometersonden gelieferten Ausgangssignale Werden nach einer Analog-Digital-Wandlung weiterverarbeitet, wobei für jeden Bildpunkt ein der Entladung an dem Bildpunkt entsprechender Bildwert gebildet wird. Nach diesem Abtastvorgang wird der Sondenträger 2 in Y-Richtung verschoben, und zwar um den Abstand zweier der rechteckförmigen Bereiche a₁ bis d₃. Anschließend erfolgt ein weiterer Abtastvorgang, in dessen Verlauf nunmehr mittels der Elektrometersonde 3 der Bereich a₂, mittels der Sonde 4 der Bereich d₂, mittels der Sonde 5 der Bereich c₂ und mittels der Sonde 6 der Bereich d₂ abgetastet wird. Dieser Vorgang einschließlich des nachfolgenden Verschiebens des Sondenträgers 2 wird so oft wiederholt, bis alle Bereiche abgetastet sind. In dem in der Figur dargestellten Beispiel wären dies drei Bereiche Pro Sonde. Dieses Beispiel wurde zur Verdeutlichung der Funktionsweise stark vereinfacht. Tatsächlich werden sehr viel mehr Bildzeilen und auch mehr Elektrometersonden zur Abtastung eines Fotoleiters vorgesehen sein. Auch wird die Breite der rechteckförmigen Bereiche a₁...d₃ sehr viel geringer im Verhältnis zu deren Länge sein.

Nach dem oben beschriebenen Abtastvorgang können die dabei gewonnenen Bildwerte weiterverarbeitet werden. Es können sich dabei jedoch aufgrund verschiedener Empfindlichkeit der Elektrometersonden 3 bis 6 streifenförmige Artefakte in dem Bild ergeben. Ist beispielsweise die Empfindlichkeit der Elektrometersonde 4 geringer als die der übrigen Sonden 3, 5 und 6, so ergibt sich im Bild ein dunkler Streifen in dem Bereich, der von der Elektrometerßonde 4 abgetastet Wurde. Es ist deshalb erfindungsgemäß ein Verfahren vorgesehen, das für alle Elektrometersonden eine Kalibrierung deren Empfindlichkeit gestattet. Der Kalibrierungsvorgang kann dabei vor oder nach dem Abtasten einer Röntgenaufnahme erfolgen. Die in der oben beschriebenen Weise gewonnenen Abtastwerte des Ladungsmusters werden nach Passieren eines Analog-Digital-Wandlers 9 in digitaler Form in einen Abtastwertspeicher 10 eingelesen. In diesem Abtastwertspeicher 10 ist nach dem Abtastvorgang ein vollständiges Bild abgespeichert, das für jeden Bildpunkt ein der Entladung an dem Bildpunkt entsprechenden Bildwert aufweist.

Zur Kalibrierung der Elektrometersonden wird vor oder nach Abtastung des Ladungsmusters der eigentlichen Röntgenaufnahme der Sondenträger 2 beispielsweise so weit verschoben, daß die Elektrometersonde 3 den rechteckförmigen Bereich b₁, die Sonde 4 den Bereich c₁ und die Sonde 5 den Bereich d₁ abtastet. Die dabei gewonnenen Abtastwerte werden nach Passieren des AnalogDigital-Wandlers 9 in einen Zwischenspeicher 11 eingelesen.

Im Ergebnis ist nun der rechteckförmige Bereich b₁ einmal von der Elektrometersonde 4 abgetastet worden. Die entsprechenden Abtastwerte sind in dem Abtastwertspeicher 10 abgespeichert. Ferner ist der Bereich b₁ aber von der Elektrometersonde 3 abgetastet worden; die dabei gewonnenen Abtastwerte sind im Zwischenspeicher 11 abgespeichert. In einem Rechenwerk 12, welches auf die Abtastwerte sowohl des Abtastwertspeichers 10 wie auch des Zwischenspeichers 11 zugreifen kann, werden nun die beiden beim Abtasten desselben Bereiches ermittelten Abtastwerte miteinander verglichen. Aus deren Höhe kann direkt auf den Unterschied der Empfindlichkeiten der Elektrometersonden 3 und 4 geschlossen werden. Es kann nun beispielsweise für die Elektrometersonde 4 ein Empfindlichkeitsquotient bestimmt werden, welcher angibt, in welchem Verhältnis die Elektrometersonde 4 empfindlicher bzw. unempfindlicher ist als die Elektrometersonde 3.

Dieser Vorgang läuft nicht nur für den Bereich b₁, sondern auch für die Bereiche c₁ und d₁ ab, welche nunmehr zwecks Kalibrierung der Sondenempfindlichkeit mittels der Sonden 4 und 5 abgetastet werden. Auch zwischen diesen Sonden und der Sonde 6 werden die entsprechenden Quotienten bestimmt, welche ebenfalls in dem Quotientenspeicher 13 abgelegt sind. Es besteht dabei die Möglichkeit, die Quotienten der Elektrometersonden 3, 4, 5 und 6 sämtlich umzurechnen auf eine relative Empfindlichkeit der Elektrometersonden 4, 5 und 6 zu der Elektrometersonde 3. Diese ermittelten Quotienten werden einem zweiten Rechenwerk 14 zugeführt. In diesem Rechenwerk werden die in dem Abtastwertspeicher 10 abgespeicherten Abtastwerte der Sonden 4, 5 und 6 mit den für diese Sonden individuell bestimmten Empfindlichkeitquotienten multipliziert. Es findet damit eine Korrektur der Bildwerte statt, bei welcher die Empfindlichkeit derjenigen Sonde, von der der Bildwert gebildet wurde, berücksichtigt wird. An einem Ausgang 15 des zweiten Rechenwerkes 14 stehen die so korrigierten Bildwerte für das vollständige Bild, in welchem für jeden Bildpunkt ein der Entladung an dem Bildpunkt entsprechender Bildwert vorliegt, zur Verfügung.

Es sei noch erwähnt, daß es zur Kalibrierung der Empfindlichkeit der Elektrometersonden nur darauf ankommt, daß jeweils zwei benachbarte Sonden ein und denselben Bereich a₁ bis d₃ abtasten. Es bestünde beispielsweise auch die Möglichkeit, sämtliche Elektrometersonden 3, 4, 5 und 6 nacheinander den Bereich b₃ abtasten zu lassen. Auch bestünde beispielsweise die Möglichkeit, zwecks Kalibrierung den Bereich a₃ mittels der Sonde 4 den Bereich b₃ mittels der Sonde 5 und den Bereich c₃ mittels der Sonde 6 zwecks Kalibrierung nochmals abzutasten.

## Patentansprüche

1. Verfahren zum Abtasten einer Röntgenaufnahme mittels mehrerer Elektrometersonden (3, 4, 5, 6), welche Ladungsmuster eines Photoleiters (1) abtasten, der vor der Röntgenaufnahme örtlich gleichmäßig aufgeladen wird, der durch die Aufnahme in Abhängigkeit der Intensität der Röntgenstrahlung entladen wird und dessen Oberfläche nach der Aufnahme zur Erfassung der Ladungsdichte abgetastet wird, wobei mittels der Elektrometersonden (3, 4, 5, 6) für jeden Bildpunkt ein der Entladung an dem Bildpunkt entsprechender Bildwert gebildet wird,
dadurch gekennzeichnet, daß für alle Elektrometersonden (3, 4, 5, 6) eine Kalibrierung deren Empfindlichkeit in der Weise vorgenommen wird, daß jeweils zwei Sonden (3, 4, 5, 6) einen identischen Teil (a₁...d₃) der Aufnahme abtasten und daß aus dem Vergleich der dabei gelieferten Ausgangssignale der Sonden (3, 4, 5, 6) deren Empfindlichkeit bestimmt wird, welche zur Korrektur der Bildwerte herangezogen wird.

2. Verfahren nach Anspruch 1,
dadurch gekennzeichnet, daß die Abtastung der Ladungsdichte mittels der Elektrometersonden zeilenweise erfolgt und daß für die Kalibrierung alle Sonden (3, 4, 5, 6) dieselbe Bildzeile abtasten.

3. Verfahren nach Anspruch 1,
dadurch gekennzeichnet, daß die Abtastung der Ladungsdichte zeilenweise erfolgt und daß zur Kalibrierung jeweils zwei benachbarte Sonden (3, 4, 5, 6) dieselbe Bildzeile abtasten.

4. Verfahren nach Anspruch 3, dadurch gekennzeichnet, daß mehrere nebeneinander in gleichen Abständen angeordneten Elektrometersonden (3, 4, 5, 6) vorgesehen sind, welche zur Erfassung des Ladungsbildes je eine Zeile abtasten, welche anschließend um den Abstand zweier Zeilen (a₁...d₃) senkrecht zur Abtastrichtung verschoben werden, wobei dieser Vorgang sich so oft wiederholt, bis alle Zeilen (a₁...d₃) einmal abgetastet worden sind, und daß zur Kalibrierung der Sondenempfindlichkeit eine weitere Verschiebung der Sonden um einen Zeilenabstand erfolgt und jede Sonde (3, 4, 5, 6) eine Zeile (a₁...d₃) abtastet, welche bereits durch eine andere Sonde (3, 4, 5, 6) abgetastet wurde und daß die doppelt vorliegenden Bildwerte zur Bestimmung der Empfindlichkeit der Sonden (3, 4, 5, 6) und zur Korrektur aller Bildwerte herangezogen werden.

5. Vorrichtung zur Durchführung des Verfahrens nach einem der Ansprüche 1 bis 3 mit einem Röntgenstrahler, einem auf einen leitenden Träger aufgebrachten Photoleiter (1), einer Aufladeeinrichtung zum Aufladen des Photoleiters und einer Speicheranordnung (10) zum Speichern der von den Elektrometersonden gelieferten, zur Ladungsdichte Proportionalen Bildwerte,
dadurch gekennzeichnet, daß die Speicheranordnung (10, 11) so ausgelegt ist, daß sie für den Kalibrierungsvorgang die doppelt erfaßten Bildwerte abspeichert, daß Mittel (12) zum Vergleich der der doppelt erfaßten Bildwerte und zur Bestimmung von Quotienten vorgesehen sind, welche ein Maß für Empfindlichkeiten der verschiedenen Sonden darstellen, und daß Mittel (13, 14) zur Multiplikation der Bildwerte jeder Bildzeile eines abgetasteten Röntgenbildes mit dem jeweils zugeordneten Quotienten vorgesehen sind.

6. Vorrichtung zur Durchführung des Verfahrens nach Anspruch 4 mit einem Röntgenstrahler, einem auf einen leitenden Träger aufgebrachten Photoleiter (1), einer Aufladeeinrichtung zum Aufladen des Photoleiters und einer Speicheranordnung (10) zum Speichern der von den Elektrometersonden gelieferten, zur Ladungsdichte Proportionalen Bildwerte,
dadurch gekennzeichnet, daß die Speicheranordnung (10, 11) so ausgelegt ist, daß sie die Bildwerte einer vollständigen Röntgenaufnahme und die Bildwerte je einer abgetasteten Bildzeile für jeden Sensor abspeichern kann, daß Mittel (12) zum Vergleich der doppelt erfaßten Bildwerte und zur Bestimmung eines Quotienten vorgesehen sind, welcher ein Maß für Empfindlichkeiten der verschiedenen Sonden darstellt, und daß Mittel (13, 14) zur Multiplikation der Bildwerte jeder Bildzeile eines abgetasteten Röntgenbildes mit dem jeweils zugeordneten Quotienten vorgesehen sind.

## Claims

1. A method of scanning an X-ray image by means of a plurality of electrometer probes (3, 4, 5, 6) which scan charge patterns of a photoconductor (1) which is locally uniformly charged prior to the X-ray exposure and is discharged by the exposure in dependence on the intensity of the X-rays, the surface of said photoconductor being scanned after the exposure in order to determine the charge density, the electrometer probes (3, 4, 5, 6) forming, for each pixel, a pixel value which corresponds to the discharge at the relevant pixel, characterized in that the sensitivity of all electrometer probes (3, 4, 5, 6) is calibrated in that two probes (3, 4, 5, 6) each scan an identical section (a₁ ... d₃) of the image, the sensitivity of the probes (3, 4, 5, 6) being determined by comparison of the output signals thus produced, said sensitivity being used to correct the pixel values.

2. A method as claimed in Claim 1, characterized in that the charge density is scanned line-wise by the electrometer probes, probes (3, 4, 5, 6) scanning the same image line for the calibration.

3. A method as claimed in Claim 1, characterized in that the charge density is scanned line-wise, two neighbouring probes (3, 4, 5, 6) each scanning the same image line for calibration.

4. A method as claimed in claim 3, characterized in that there are provided a plurality of electrometer probes (3, 4, 5, 6) which are adjacently arranged at the same distance from one another and which each scan one line in order to determine the charge image, which probes are subsequently displaced over a distance of two lines (a₁ ... d₃) in the direction perpendicular to the scanning direction, said operation being repeated until all lines (a₁ ... d₃) have been scanned once, and that for calibration of the probe sensitivity the probes are displaced one line distance further, each probe (3, 4, 5, 6) scanning a line (a₁ ... d₃) which has already been scanned by another probe (3, 4, 5, 6), the twice present pixel values being used for determining the sensitivity of the probes (3, 4, 5, 6) and for correcting all pixel values.

5. A device for performing the method claimed in any one of the Claims 1 to 3, comprising an X-ray source, a photoconductor (1) provided on a conductive carrier, a charging device for charging the photoconductor, and a memory device (10) for storing the pixel values which are supplied by the electrometer probes and which are proportional to the charge density, characterized in that the memory device (10, 11) is designed so that it stores the pixel values determined twice for the calibration operation, there being provided means (12) for comparing the twice determined pixel values and for determining quotients which are a measure of sensitivities of the various probes, there also being provided means (13, 14) for multiplying the pixel values of each image line of a scanned X-ray image by the relevant associated quotient.

6. A device for performing the method claimed in Claim 4, comprising an X-ray source, a photoconductor (1) provided on a conductive carrier, a charging device for charging the photoconductor, and a memory device (10) for storing the pixel values which are supplied by the electrometer probes and which are proportional to the charge density, characterized in that the memory device (10, 11) is designed so that it can store the pixel values of a complete X-ray image and the pixel values of each scanned image line for each sensor, there being provided means (12) for comparing the twice determined pixel values and for determining a quotient which is a measure of sensitivities of the various probes, there also being provided means (13, 14) for multiplying the pixel values of each image line of a scanned X-ray image by the relevant associated quotient.

## Revendications

1. Procédé de balayage d'une image radiographique à l'aide de plusieurs sondes électrométriques (3, 4, 5, 6) qui balayent un motif de charge d'un photoconducteur (1), qui a été chargé localement de manière uniforme avant l'enregistrement de l'image radiographique, est déchargé en fonction de l'intensité du rayonnement X et dont la surface est balayée après l'enregistrement pour détecter la densité de charge, ledit procédé permettant de former au moyen des sondes électrométriques (3, 4, 5, 6), pour chaque point d'image, une valeur d'image correspondant à la décharge au niveau de ce point d'image, caractérisé en ce que pour toutes les sondes électrométriques, on effectue un calibrage de sensibilité au cours duquel deux sondes balayent chacune une partie identique de l'enregistrement et, à partir de la comparaison des signaux de sortie des sondes ainsi obtenus, leur sensibilité est déterminée et est utilisée pour corriger les valeurs d'image.

2. Procédé suivant la revendication 1, caractérisé en ce que le balayage de la densité de charge est réalisé ligne par ligne à l'aide des sondes électrométriques et que, pour le calibrage, toutes les sondes (3, 4, 5, 6) balayent la même ligne d'image.

3. Procédé suivant la revendication 1, caractérisé en ce que le balayage de la densité de charge est réalisé ligne par ligne et que, pour le calibrage, deux sondes voisines (3, 4, 5, 6) balayent chaque fois la même ligne d'image.

4. Procédé suivant la revendication 3, caractérisé en ce que sont prévues plusieurs sondes électrométriques (3, 4, 5, 6) disposées les unes à côté des autres à des distances égales qui balayent chacune une ligne pour détecter l'image de charge, qui sont ensuite déplacées de la distance de deux lignes (a₁ ... d₃) perpendiculairement à la direction de balayage, ce processus étant répété autant de fois qu'il le faut pour que toutes les lignes (a₁ ... d₃) soient balayées une fois, et que, pour le calibrage de la sensibilité des sondes, un nouveau déplacement des sondes d'un intervalle de ligne est prévu, chaque sonde (3, 4, 5, 6) balayant une ligne (a₁ ... d₃) qui a déjà été balayée par une autre sonde (3, 4, 5, 6), et que les valeurs d'image présentes en double sont utilisées pour déterminer la sensibilité des sondes (3, 4, 5, 6) et pour corriger toutes les valeurs d'image.

5. Dispositif pour l'exécution du procédé suivant l'une quelconque des revendications 1 à 3, comprenant un générateur de rayons X, un photoconducteur (1) prévu sur un support conducteur, un dispositif de charge destiné à charger le photoconducteur et un dispositif de mémoire (10) pour le stockage des valeurs d'image proportionnelles à la densité de charge, fournies par les sondes électrométriques, caractérisé en ce que le dispositif de mémoire (10, 11) est conçu de telle façon que, pour le processus de calibrage, il stocke les valeurs d'image détectées en double, que des moyens (12) sont prévus pour la comparaison des valeurs d'image détectées en double et pour la détermination de quotients qui représentent une mesure des sensibilités des diverses sondes et que des moyens (13, 14) sont prévus pour la multiplication des valeurs d'image de chaque ligne d'image d'une image radiographique balayée par les quotients respectivement associés.

6. Dispositif pour l'exécution du procédé suivant la revendication 4, comprenant un générateur de rayons X, un photoconducteur (1) appliqué sur un support conducteur, un dispositif de charge pour la charge du photoconducteur et un dispositif de mémoire (10) pour le stockage des valeurs d'image proportionnelles à la densité de charge, fournies par les sondes électrométriques, caractérisé en ce que le dispositif de mémoire (10, 11) est conçu tel qu'il puisse stocker les valeurs d'image d'une image radiographique complète et les valeurs d'image de chaque ligne d'image balayée individuellement pour chaque sonde, que des moyens (12) sont prévus pour la comparaison des valeurs d'image détectées en double et pour la détermination d'un quotient qui constitue une mesure des sensibilités des diverses sondes, et que des moyens (13, 14) sont prévus pour la multiplication des valeurs d'image de chaque ligne d'image d'un enregistrement radiographique balayé par le quotient chaque fois associé.
